# EUROPEAN PATENT SPECIFICATION

(11) **EP 4 033 502 B1**
(45) Date of publication and mention of the grant of the patent: **07.01.2026**
(21) Application number: 22152208.9
(22) Date of filing: 19.01.2022
(51) Int. Cl.: H01B 17/26, H01R 13/53, H02G 15/064

(54) **BUSHING UNIT AND POWER CABLE CONNECTION STRUCTURE FOR A RAILWAY VEHICLE**
DURCHFÜHRUNGSEINHEIT UND STROMKABELVERBINDUNGSSTRUKTUR FÜR EIN SCHIENENFAHRZEUG
UNITÉ DE DOUILLE ET STRUCTURE DE CONNEXION DE CÂBLE ÉLECTRIQUE POUR UN VÉHICULE FERROVIAIRE

(30) Priority: 21.01.2021 JP 2021007871; 28.09.2021 JP 2021158113; 18.11.2021 JP 2021187566
(43) Date of publication of application: 27.07.2022
(73) Proprietor: Proterial, Ltd., Tokyo 135-0061 (JP)
(72) Inventor: MURATA, Wataru, Tokyo, 108-8224 (JP); HIRATA, Hiroyuki, Tokyo, 108-8224 (JP)
(74) Representative: Betten & Resch

(56) References cited:
- JP-A- 2007 103 228
- JP-A- 2007 188 735
- JP-A- 2011 188 719
- JP-A- 2018 185 967
- US-A1- 2005 016 752

## Description

### TECHNICAL FIELD

The present invention relates to a bushing unit.

The present invention also relates to a power cable connection structure for a railway vehicle.

### BACKGROUND ART

A bushing unit (e.g., epoxy unit) described in JP 2014-45553 A (Patent Literature 1) includes an inner conductor (i.e., center conductor) connected to an end of a power cable, and a bushing (i.e., insulator pipe, insulating tube) that is made of an epoxy resin and covers the inner conductor. A cylindrical earth electrode (i.e., shielding electrode) surrounding an end of the inner conductor on one side is embedded in the bushing. The earth electrode extends out of an end of the bushing on the one side and is electrically connected to a ground potential when the bushing unit is in use. By providing the earth electrode, it is possible to shield an electric field on the inner circumferential side of the earth electrode and it is thereby possible to reduce electric field strength around the bushing. In addition, an inner circumferential surface of the bushing has an arrangement surface (i.e., receiving portion) on which a stress cone attached to an outer circumference of the end of the power cable and inserted into the bushing is arranged.

Patent Literature 2 describes a bushing unit including a conductor drawing rod having a conductor insertion hole to which a terminal of power cable is inserted, a hard insulator pipe (i.e., bushing) covering the conductor drawing rod, an embedding metal piece that is partially embedded in the insulator pipe and concentrically arranged with the conductor drawing rod, and a bottomed metal piece that is fixed at a portion of the embedded metal piece exposed from the insulator pipe. A cable terminal portion is inserted into the bushing unit described in Patent Literature 1, so that a cable terminal connecting portion is formed from the bushing unit and the cable terminal portion.

In the bushing unit described in Patent Literature 2, one side where the power cable is connected to the conductor drawing rod (e.g., the bottom side of FIGS. 1 and 2 of Patent Literature 2) is defined as a proximal end side and a side opposite to the proximal end side (e.g., the upper side of FIGS. 1 and 2 of Patent Literature 2) is defined as a distal end side. In this case, in the bushing unit described in Patent Literature 2, the bottomed metal piece is fixed to a supporting insulator in such a manner that an attachment surface of the bottomed metal piece, which is a surface on the proximal distal end, is abutting with the supporting insulator as an attachment target member.

JP 2007 188735 A discloses a bushing which stabilizes surface pressure on a tapered joining face while preventing air bubbles and foreign matter from being mixed in the tapered joining face of each split bushing. A first split bushing is provided with: a first inner conductor; a first solid insulator having a receiving port provided around the first inner conductor; and a first shielding layer provided around the first solid insulator. A second split bushing is provided with: a second inner conductor; a second solid insulator having a conical inserter provided around the second inner conductor so as to be inserted into the receiving port; and a second shielding layer provided around the second solid insulator. The second split bushing is also provided with an insulating rubber molded body which covers around the inserter and around the vicinity of the insertion part respectively, and whose inner peripheral face is tightly fitted to the second shielding layer.

US 2005/016752 A1 discloses a bushing unit according to the preamble of claim 1. The document discloses a polymer jacket tube includes a conductor bar which has a conductor insertion hole 1a at its lower end part, a rigid insulation sleeve which is provided at the outer periphery of the conductor bar, and a polymer covering which is provided at the outer periphery of the insulation sleeve. The insulation sleeve includes a large-diameter insulation sleeve which is provided at the outer peripheral part of the lower portion of the conductor bar, and a small-diameter insulation sleeve which is provided at the outer peripheral part of the portion of the conductor bar except the distal end part thereof, and an embedded metal fitting for electrical stress relief is buried in the continuous portion of the large-diameter insulation sleeve and the small-diameter insulation sleeve. Besides, a cone-shaped reception port hich receives the stress cone of a cable terminal is provided at the lower end part of the large-diameter insulation sleeve, and this reception port is held in communication with the conductor insertion hole of the conductor bar.

JP 2011 188719 A discloses a polymer bushing and a cable terminal connection, capable of electrically connecting a shielding metal fixture to a conductive layer and preventing the occurrence of partial discharge, even if the shielding metal fixture and the conductive layer are separated from each other due to a heat cycle. The polymer bushing includes: a circular lower metal fixture which is arranged on the outer circumferential surface of an insulated cylinder having a conductive layer formed thereon, and has an upper end part attached to the lower end surface of the flange part of the shielding metal fixture; a circular groove which is opened toward the outer circumferential surface of the insulated cylinder having the conductive layer formed thereon and the lower end surface of the flange part of the shielding metal fixture, in the inner diameter corner part of the upper end part of the lower metal fixture; and a conductive O-ring which is disposed on the groove and closely contacts both the outer circumferential surface of the insulated cylinder having the conductive layer formed thereon, and the lower end surface of the flange part of the shielding metal fixture. JP 2018 185967 A discloses a polymer bushing that can reduce the deformation or vibration of a shade under the influence of wind pressure. A polymer bushing has: an insulator formed from polymer material and having a shade; and a ring-like reinforcement core material, included in the shade of the insulator. The reinforcement core material has a vertical cross-sectional shape thinning toward the outer peripheral side of the polymer bushing.

Also document JP 2007 103228 A discloses a bushing unit according to the preamble of claim 1.

### CITATION LIST

### PATENT LITERATURE

Patent Literature 1: JP 2014-45553 A
Patent Literature 2: JP 2003-304632 A
Patent Literature 3: JP 2007 188735 A
Patent Literature 4: US 2005/016752 A1
Patent Literature 5: JP 2011 188719 A
Patent Literature 6: JP 2018 185967 A

### SUMMARY OF THE INVENTION

In the bushing unit described in Patent Literature 1, the earth electrode is provided to extend to a position where it overlaps with the arrangement surface when viewed in a radial direction, which may cause an increase in size of the bushing. This will be described below.

Firstly, the arrangement surface needs to have a large inner diameter to allow the insertion of the stress cone attached to the power cable. Secondly, portions of the bushing located on the inner and outer circumference sides of the earth electrode need to have a certain thickness since manufacturing problems such as short shots (molding defects) may occur if such portions are excessively thin. Therefore, there is no choice but to increase an outer diameter of the bushing in an axial region where the earth electrode and the arrangement surface overlap when viewed in the radial direction. This may result in an increase in size of the bushing in the bushing unit described in Patent Literature 1.

Secondary, in the bushing unit described in Patent Literature 2, the bottomed metal piece is entirely located on the distal end side relative to the attachment surface. Thus, a portion on the distal end side relative to the attachment surface largely protrudes toward the distal end side, and thus the bushing unit described in Patent Literature 2 may increase in size.

In addition, in the bushing unit described in Patent Literature 2, the conductor insertion hole of the conductor drawing rod is located on the proximal end side relative to the attachment surface. Thus, the power cable inserted into the conductor insertion hole and members fixed to the power cable (e.g., a shielding portion, a lower metal piece, an adaptor and the like in Patent literature 2) are located on the proximal end side relative to the attachment surface. Therefore, when the bushing unit described in Patent Literature 2 is used, a cable terminal connecting portion formed of the bushing unit and the cable terminal portion largely protrudes from the proximal end side relative to the attachment surface and thus the bushing unit may increase in size.

When such a terminal connecting portion is arranged on and used for, particularly, railway vehicles (i.e., rolling stocks), the demand for reducing sizes of a region extending from the attachment surface to both side portions in the cable terminal connecting portion is remarkably large. That is, in the railway vehicles, since a space for allowing the installation of the cable terminal connecting portion is very limited, reduction in size of the region extending from the attachment surface to both side portions is especially required.

The invention was made in view of such circumstances and it is an object of the invention to provide a bushing unit in which a bushing can be reduced in size.

Further, it is another object of the invention to provide a bushing unit for a railway vehicle and a power cable connection structure for a railway vehicle, which can be reduced in size.

The present invention is defined in independent claim 1. The dependent claims define embodiments of the invention.

### BRIEF DESCRIPTION OF DRAWINGS

FIG. 1 is an exploded cross-sectional view showing a power cable connection structure in an embodiment in a state in which a bushing unit and a cable assembly (i.e., assy) are disassembled.
FIG. 2 is a cross-sectional view showing the power cable connection structure in the embodiment.
FIG. 3 is an enlarged cross-sectional view showing part of FIG. 2.
FIG. 4 is a side view showing a flange member in the embodiment.
FIG. 5 is a cross-sectional view showing the flange member in the embodiment.
FIG. 6 is a front view showing the flange member in the embodiment.
FIG. 7 is a back view showing the flange member in the embodiment.
FIG. 8 is a side view showing an earth electrode, plural embedded conductive members and plural connection members in the embodiment.
FIG.9 is a top view showing a railway vehicle on which the power cable connection structure in the embodiment is attached.
FIG. 10 is a side view showing the railway vehicle on which the power cable connection structure in the embodiment is attached.

### BEST MODE FOR CARRYING OUT THE INVENTION

### (Embodiment)

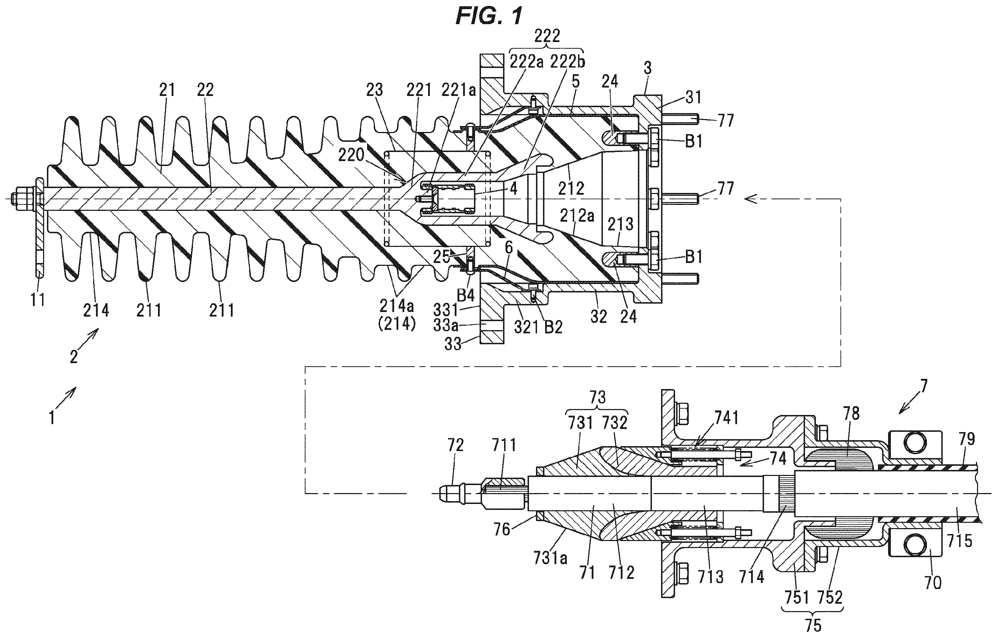

An embodiment of the invention will be described in reference to FIGS. 1 to 10. The embodiment below is described as a preferred example for implementing the invention. Although some part of the embodiment specifically illustrates various technically preferable matters, the technical scope of the invention is not limited to such specific aspects.

### (Power cable connection structure 10)

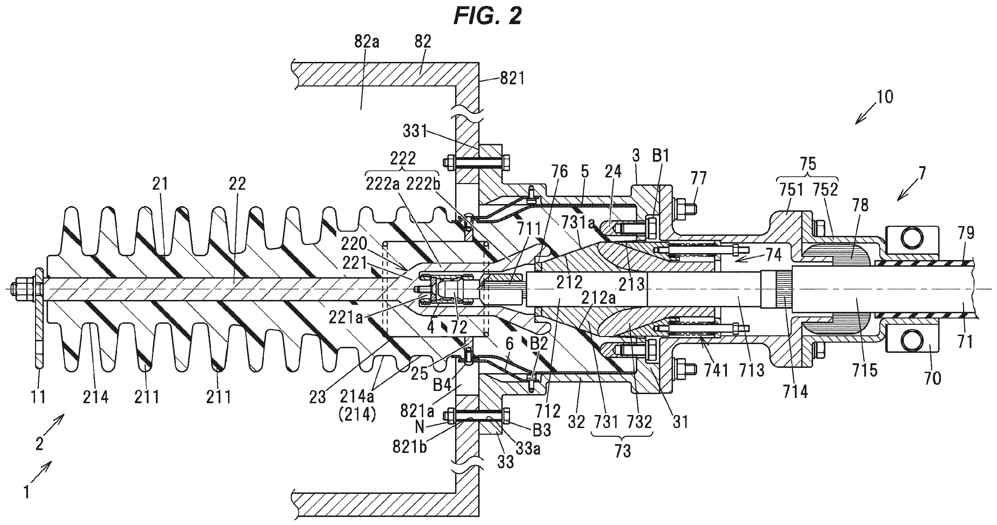

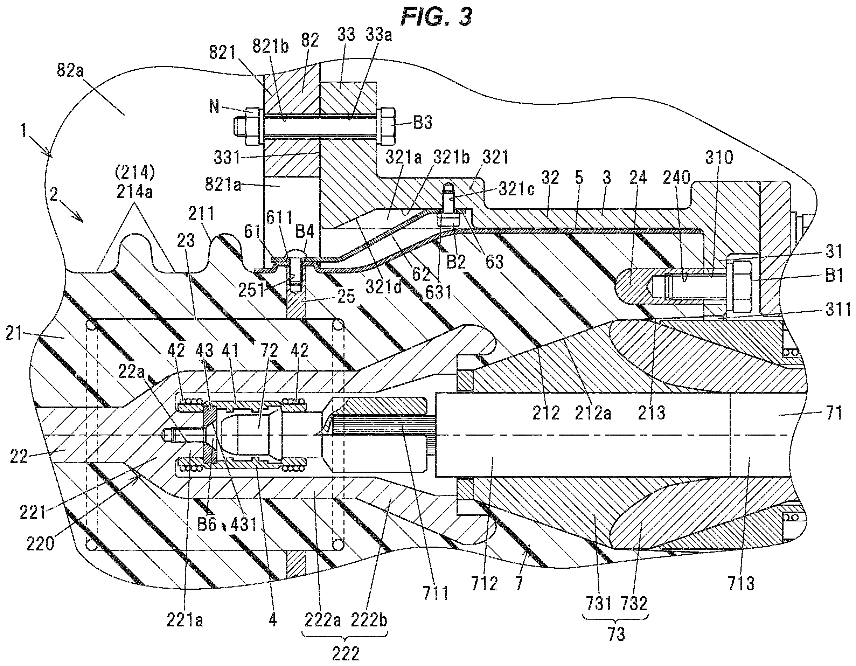

FIG. 1 is an exploded cross-sectional view showing a power cable connection structure 10 in the present embodiment in a state in which a bushing unit 1 and a cable assembly 7 are disassembled. FIG. 2 is a cross-sectional view showing the power cable connection structure 10. FIG. 3 is an enlarged cross-sectional view showing part of FIG. 2.

As shown in FIG. 2, the power cable connection structure 10 when in use is attached to, e.g., an equipment box 82 as an attachment target member (i.e., a member to be attached) arranged on a roof, etc., of a railway vehicle. As will be described in detail later, the power cable connection structure 10 is attached to the equipment box 82 in a state in which a portion thereof protrudes into an inner space 82a of the equipment box 82. The power cable connection structure 10 is a structure to provide connection between a power cable 71 to be applied high voltage and an electrical path connected thereto while ensuring electrical insulation from the surroundings and is formed by assembling the bushing unit 1 with the cable assembly 7 as shown in FIGS. 1 and 2.

### (Bushing unit 1)

The bushing unit 1 includes a bushing structure 2 integrally formed with (i.e., as one piece with) a bushing 21, and a flange member 3 fixed to the bushing structure 2. The bushing structure 2 is formed by embedding an inner conductor 22 and an earth electrode 23, etc., in the bushing 21 made of an epoxy resin. The bushing 21, the inner conductor 22 and the earth electrode 23, etc., of the bushing structure 2 are integrally formed by placing the inner conductor 22 and the earth electrode 23, etc., in a mold for molding the bushing 21 and then pouring a molten epoxy resin into the mold.

Hereinafter, an axial direction of the bushing unit 1 (i.e., an axial direction of the inner conductor 22 and an axial direction of the bushing 21, and a right-left direction (i.e., horizontal direction) in FIGS. 1 to 3) is simply referred to as the axial direction. In addition, one side of the inner conductor 22 in the axial direction where the power cable 71 is connected (e.g., the right side in FIGS. 1 to 3) is referred to as an axial proximal end side (i.e., axial base side), and the opposite side (e.g., the left side in FIGS. 1 to 3) is referred to as an axial distal end side (i.e., axial tip side). Furthermore, a term simply referred to as a circumferential direction means a circumferential direction around a central axis of the power cable connection structure 10, and a term simply referred to as a radial direction means a radial direction of the power cable connection structure 10 centered at the central axis.

The inner conductor 22 has a substantially rod shape that is long in the axial direction. The inner conductor 22 is embedded in the bushing 21 in such a manner that its end portion on the axial distal end side protrudes from the bushing 21. The end portion of the inner conductor 22 protruding from the bushing 21 is electrically connected, via a terminal metal piece (i.e., terminal fitting) 11 fixed to such an exposed portion, to an electrical path (not shown) to which the power cable 71 is connected.

As shown in FIG. 3, a bottomed cylindrical portion 220 opening on the axial proximal end side is provided at an end of the inner conductor 22 on the axial proximal end side. The bottomed cylindrical portion 220 has a bottom wall portion 221 and a hollow cylindrical wall portion 222 extending from the bottom wall portion 221 toward the axial proximal end.

An outer circumferential surface of the bottom wall portion 221 is tapered in such a manner that a diameter increases toward the axial proximal end. A boss portion 221a protruding toward the axial proximal end is provided on the bottom wall portion 221. The boss portion 221a has a female threaded hole, and a contact member 4 to removably connect the inner conductor 22 to the power cable 71 is bolted.

The cylindrical wall portion 222 extends from an outer circumferential edge of the bottom wall portion 221 toward the axial proximal end and surrounds a connecting portion at which the power cable 71 and the inner conductor 22 are connected via the contact member 4. The cylindrical wall portion 222 has a cylindrical portion 222a formed straight from the bottom wall portion 221 along the axial direction, and a diameter enlarging portion 222b with inner and outer diameters both increasing from the cylindrical portion 222a toward the axial proximal end. An inner circumferential surface of the cylindrical wall portion 222 is exposed from the bushing 21. The contact member 4 is arranged in the axial cylindrical portion 222a of the bottomed cylindrical portion 220.

As shown in FIG.3, the contact member 4 can be configured as, e.g., a tulip contact, and removably connects the inner conductor 22 to the power cable 71. The contact member 4 includes a main body portion 41 formed by aligning lengthy conductors in an axial direction to have a circular shape, a fastening spring portion 42 that fastens the main body portion 41 radially inwardly, and an annular fixing plate portion 43 that is fitted onto an inner circumferential portion of the main body portion 41. In the main body portion 41, an end portion on the axial proximal end side is outer fitted onto a connection terminal 72 (to be described later) that is connected to the power cable 71, and an end portion of the main body portion 41 on an axial distal end side is outer fitted onto the boss portion 221a of the inner conductor 22. The main body portion 41 is thereby electrically connected to both the connection terminal 72 and the inner conductor 22. The fastening spring portion 42 is wound around respective outer circumferences of both axial ends of the contact member 4. The fixing plate portion 43 is fitted onto the inner circumferential portion of the main body portion 41 at a position on the axial distal end side of the connection terminal 72. The contact member 4 is fixed to the inner conductor 22 by inserting a bolt B6 into a through-hole 431 formed on the fixing plate portion 43 and threading the bolt B6 into a female thread hole 22a of the inner conductor 22. It should be noted that a structure other than the tulip contact may be used, as long as the contact member 4 can electrically relay the power cable 71 and the inner conductor 22.

As shown in FIGS. 1 and 2, the bushing 21 is made of an epoxy resin and is formed in a substantially tubular shape that is lengthy in the axial direction. Particularly when the power cable connection structure 10 is installed outdoors such as on a roof of a railway vehicle, it is preferable that an epoxy resin excellent in weather resistance be used as a resin constituting the bushing 21.

Annular shed portions 211 protruding outward are formed on the outer circumference of the bushing 21 at plural locations in the axial direction X at predetermined intervals. By forming the plural shed portions 211 on the bushing 21, it is possible to ensure a creepage distance on the outer circumferential surface of the bushing 21 and to suppress occurrence of creeping discharge along the surface of the bushing 21. **In** the present embodiment, outer diameters of the plural shed portions 211 are substantially the same as each other. When the outer diameter of the shed portion 211 having the largest outer diameter among the plural shed portions 211 is defined as the maximum outer diameter and the outer diameter of the shed portion 211 having the smallest outer diameter among the plural shed portions 211 is defined as the minimum outer diameter, a ratio of the maximum outer diameter to the minimum outer diameter, i.e., "the maximum outer diameter/the minimum outer diameter" is preferably not more than 1.1, more preferably, not more than 1.05. In addition, in the present embodiment, the outer diameter of each shed portion 211 is substantially equal to an outer diameter of an end portion of the bushing 21 on the axial proximal end side.

An electric field shielding layer 5 is provided on the outer circumferential surface of the bushing 21. The electric field shielding layer 5 is formed from a position of an edge of the bushing 21 on the axial proximal end side to a position just before the shed portion 211 located on the most axial proximal end side among the shed portions 211 of the bushing 21. In the present embodiment, the electric field shielding layer 5 is provided to extend to a position on the axial distal end side relative to embedded conductive members 25 (described later). The electric field shielding layer 5 is provided on the outer circumferential surface of the bushing 21 around the entire circumference. The electric field shielding layer 5 shields an electric field in its inner region and thereby serves to suppress an increase in electric field strength around the bushing 21. The electric field shielding layer 5 is made of, e.g., an electrically conductive coating applied to the outer circumferential surface of the bushing 21. It is possible to reduce the weight and thickness of the electric field shielding layer 5 by forming the electric field shielding layer 5 from a layer made of the electrically conductive coating.

An inner circumferential surface of the bushing 21 has an arrangement surface 212 on which a stress cone 73 is arranged in contact therewith. The arrangement surface 212 has a shape corresponding to the outer shape of the stress cone 73 arranged inside the bushing 21 and, in the present embodiment, has at least an inclined arrangement surface 212a inclined outwardly toward the axial proximal end. The inner circumferential surface of the bushing 21 also includes a cylindrical surface 213 formed from the arrangement surface 212a toward the axial proximal end along the axial direction. A portion of the cylindrical surface 213 on the axial distal end side also constitutes the arrangement surface 212 on which the stress cone 73 is arranged in contact therewith. Plural nut members 24 to fix the bushing 21 to the flange are embedded in the bushing 21 on the outer side of the arrangement surface 212.

As shown in FIG. 3, the nut member 24 is a cap nut that is long in the axial direction and has a female threaded hole 240 opening on an end face on the axial proximal end side. An end portion of the nut member 24 on the axial proximal end side is exposed from the bushing 21. The flange member 3 is tightened (i.e., tightened) to the nut members 24 by bolts B1.

As shown in FIG. 2, the flange member 3 is attached to the equipment box 82. The equipment box 82 when installed on a roof of a railway vehicle is at ground potential, and accordingly, the flange member 3 is at the same potential as the equipment box 82, i.e., at ground potential when the power cable connection structure 10 is used.

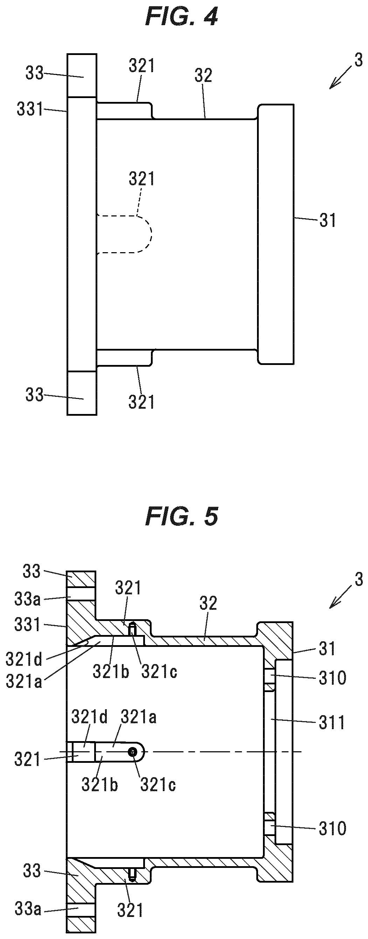

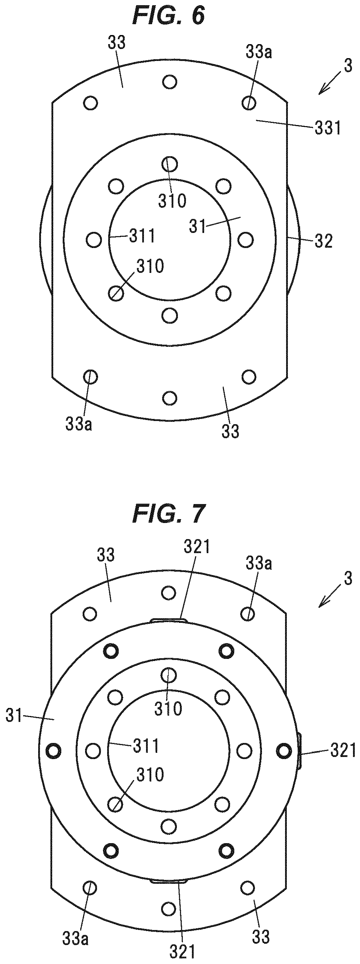

FIG. 4 is a side view showing the flange member 3. FIG. 5 is a cross-sectional view showing the flange member 3. FIG. 6 is a front view showing the flange member 3. FIG. 7 is a back view showing the flange member 3. The flange member 3 has a cup shape and has a flange bottom wall 31, a flange side wall 32 and flange attachment walls 33. The flange bottom wall 31 is formed in a disc shape with an opening hole 311 in the center, and axially faces an end face of the bushing 21 on the axial proximal end side. The bolts B1 are inserted into through-holes 310 provided on the flange bottom wall 31 and are threaded into the female threaded holes 240 of the nut members 24, and the flange member 3 is thereby fixed to the bushing 21. A fixing portion between the flange member 3 and the bushing 21 is arranged on the axial proximal end side relative to the attachment surface 331. Therefore, it is possible to reduce a protruding length of the bushing unit 1 protruding from the attachment surface 331 toward the axial distal end side (i.e., protruding into the inner space 82a of the equipment box 82). Many wires are routed inside the equipment box 82 in many cases, and if the bushing unit 1 largely protrudes into the equipment box 82, electrical insulation between the bushing unit 1 and the nearby wires may decrease. However, by reducing the protruding length of the bushing unit 1 protruding into the inner space 82a of the equipment box 82, it is possible to suppress a decrease in electrical insulation between the bushing unit 1 and the nearby wires. In addition, it is possible to suppress an increase in size of a portion of the bushing unit 1 on the axial distal end side relative to the attachment surface 331 (i.e., a portion configured to be inserted into the inner space 82a of the equipment box 82). Thus, it is possible to further reduce the size of an attachment hole 821a of the equipment box 82 into which the portion of the bushing unit 1 on the axial distal end side relative to the attachment surface 331 is inserted. In the present embodiment, the fixing portion between the flange member 3 and the bushing 21 is arranged on the axial proximal end side relative to the attachment surface 331. It is thereby possible to further reduce the size of the attachment hole 821a. In other words, the power cable connection structure 10 in the present embodiment can be inserted into the inner space 82a of the equipment box 82 through the attachment hole 821a having a small diameter. It can be said as the structure contributing to the reduction in size which is inherent in the application for the railway vehicle.

As shown in FIGS. 4 and 5, the flange side wall 32 is formed in a cylindrical shape. Member arrangement portions 321 with an outer circumferential surface raised outward and an inner circumferential surface recessed toward the outer circumference are formed on the flange side wall 32 at three locations in the circumferential direction. Each member arrangement portion 321 has a female threaded hole 321c opening on a bottom surface 321b of a recessed portion 321a formed on the inner side of the member arrangement portion 321. As shown in FIG. 3, a bolt B2 is threaded into the female threaded hole 321c, and a connection member 6 (to be described later) is fixed to the flange member 3 by the bolt B2.

The axial distal end side of the recessed portion 321a is closed by an inclined surface 321d. The inclined surface 321d is a surface inclined inward toward the axial distal end. Since the surface closing the axial distal end side of the recessed portion 321a is a surface inclined as is the inclined surface 321d, it is possible to provide a wide space around the connection member 6 and it is possible to prevent the connection member 6 from coming into contact with the flange member 3 and the bushing 21, etc., during work of fixing the connection member 6 to the flange member 3 and the embedded conductive member 25 (to be described later).

A pair of the flange attachment walls 33 are provided on both sides in a direction perpendicular to the axial direction so as to protrude from an end of the flange side wall 32 on the axial distal end side. A surface of each flange attachment wall 33 on the axial distal end side constitutes an attachment surface 331 to which the equipment box 82 is attached. As shown in FIGS. 2 and 3, the bushing unit 1 is inserted into the inner space 82a of the equipment box 82 through an attachment hole 821a provided on the equipment box 82, and the attachment surfaces 331 of the flange attachment walls 33 face a wall portion of the equipment box 82 around the attachment hole 821a.

Bolt insertion holes 33a and 821b communicating with each other are respectively formed on the flange attachment walls 33 and the equipment box 82. The flange attachment walls 33 and the equipment box 82 are bolted to each other by inserting bolts B3 into the bolt insertion holes 33a and the bolt insertion holes 821b and threading nuts N onto the bolts B3 that protrude from the bolt insertion holes 821b on the axial distal end side. In a state in which the flange attachment walls 33 are tightened to the equipment box 82 installed on a roof of a railway vehicle, the flange attachment walls 33 are at the same potential as the equipment box 82, i.e., at ground potential. The earth electrode 23 is embedded in the bushing 21 so as to be electrically connected to the flange member 3.

The earth electrode 23 is formed in a cylindrical shape along the axial direction and surrounds a portion of the inner conductor 22 from the outer circumference side. The earth electrode 23 is entirely embedded in the bushing 21 and is not exposed outside from the bushing 21. In the present embodiment, the earth electrode 23 is a cylindrical metal mesh and has many holes (i.e., mesh opening portions). By using the earth electrode 23 with many holes, it is possible to suppress molding defects on the bushing 21. That is, when the bushing 21 is formed by insert molding which is performed with the earth electrode 23, etc., placed in a mold, a molten epoxy resin constituting the bushing 21 passes through the mesh openings of the metal mesh and sufficiently flows into and around the earth electrode 23 during the insert molding, and occurrence of molding defects is thereby suppressed. Each of both axial end portions of the earth electrode 23 is rolled inwardly. In this regard, the earth electrode 23 is not limited to the metal mesh, and it is possible to use an earth electrode having another structure, such as a cylindrical conductor with many holes such as slits or punched holes or a cylindrical conductor without holes, etc., as long as it is possible to shield a surrounding electric field.

The position of the end portion of the earth electrode 23 on the axial proximal end side is located on the axial distal end side relative to the arrangement surface 212 and is away from the arrangement surface 212. In addition, the position of the end portion of the earth electrode 23 on the axial proximal end side is located slightly on the axial distal end side relative to a position of a boundary between the cylindrical portion 222a and the diameter enlarging portion 222b. Furthermore, the position of the end portion of the earth electrode 23 on the axial proximal end side is located on the axial proximal end side relative to the attachment surface 331. When viewed in the radial direction, a portion of the earth electrode 23 on the axial proximal end side overlaps a portion of the electric field shielding layer 5 on the axial distal end side.

The position of the end portion of the earth electrode 23 on the axial distal end side is located on the axial distal end side relative to the attachment surface 331. In addition, the position of the end portion of the earth electrode 23 on the axial distal end side is located on the axial distal end side relative to the bottom wall portion 221 of the bottomed cylindrical portion 220 of the inner conductor 22. However, it is not limited thereto, and the position of the end portion of the earth electrode 23 on the axial distal end side may be located on, e.g., the axial proximal end side relative to a boundary between the bottom wall portion 221 and the cylindrical portion 222a of the bottomed cylindrical portion 220.

Furthermore, the position of the end portion of the earth electrode 23 on the axial distal end side is located on the axial proximal end side relative to a position of an edge on the axial distal end side of large-diameter inter-shed surfaces 214a (to be described later). The large-diameter inter-shed surfaces 214a are some of inter-shed surfaces 214 constituting the outer circumferential surface of the bushing 21 and connecting between the shed portions 211 adjacent in the axial direction, and are the inter-shed surfaces 214 having a larger diameter than other inter-shed surfaces 214. Among the plural inter-shed surfaces 214, the inter-shed surface 214 located at an end on the axial proximal end side and the inter-shed surface 214 adjacent thereto on the axial distal end side are the large-diameter inter-shed surfaces 214a in the present embodiment. It is configured such that the earth electrode 23 can be conducted, via the embedded conductive members 25 connected thereto, to the outside of the bushing 21.

As shown in FIG. 3, the embedded conductive member 25 is a columnar conductor extending radially outward from the earth electrode 23 and is embedded in the bushing 21 so that an end portion on the radially outer side is exposed. The embedded conductive member 25 is exposed on the outer circumferential surface of the bushing 21 in a region where the electric field shielding layer 5 is formed.

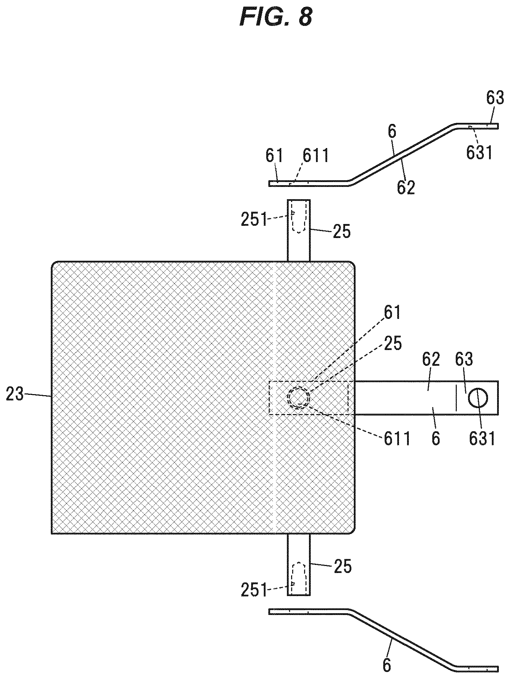

FIG. 8 is a side view showing the earth electrode 23, the plural embedded conductive members 25 and the plural connection members 6. An end portion of each embedded conductive member 25 on the earth electrode 23 side is joined to the earth electrode 23 by welding, etc. In the present embodiment, the embedded conductive members 25 are connected to the earth electrode 23 at three locations in the circumferential direction. The three embedded conductive members 25 are provided at the same position in the axial direction and are spaced at 90° in the circumferential direction. Each embedded conductive member 25 has a female threaded hole 251 opening radially outward. The connection members 6 are tightened to the embedded conductive members 25 using bolts B4.

As shown in FIG. 8, three connection members 6 are provided and respectively connected to the three embedded conductive members 25. The connection member 6 is formed by bending a long plate-shaped conductor and includes a first connecting portion 61, an inclined portion 62 and a second connecting portion 63.

As shown in FIG. 3, the first connecting portion 61 is formed along the axial direction and radially overlaps with the embedded conductive member 25 via the electric field shielding layer 5. The bolt B4 is inserted into a through-hole 611 formed on the first connecting portion 61 and threaded into the female threaded hole 251 of the embedded conductive member 25, and the first connecting portion 61 is thereby tightened to the embedded conductive member 25. The connection members 6, the electric field shielding layer 5, the embedded conductive members 25 and the earth electrode 23 are electrically connected to each other in a state in which the first connecting portions 61 are tightened to the embedded conductive members 25 by the bolt B4.

The inclined portion 62 is formed so as to couple the first connecting portions 61 to the second connecting portion 63 and is inclined radially outward toward the axial proximal end. The inclined portion 62 faces the inclined surface 321d of the flange member 3.

The second connecting portion 63 is formed along the axial direction and overlaps the bottom surface 321b of the member arrangement portion 321. The bolt B2 is inserted into a through-hole 631 formed on the second connecting portion 63 and threaded into the female threaded hole 321c provided on the member arrangement portion 321, and the second connecting portion 63 is thereby tightened to the flange member 3. The second connecting portion 63 and the bolt B2 are arranged so as to be housed inside the member arrangement portion 321 of the flange side wall 32. The cable assembly 7 is connected to the bushing unit 1 from the proximal end side of the flange member 3.

### (Cable assembly 7)

As shown in FIGS. 1 and 2, the cable assembly 7 includes the power cable 71, the connection terminal 72, the stress cone 73, a compression device 74 and a cover member 75. The power cable 71 includes, sequentially from the center, a cable conductor 711, a cable inner semi-conductive layer (not shown), a cable insulation 712, a cable outer semi-conductive layer 713, a cable shield layer 714 and a cable sheath 715. The power cable 71 is stripped stepwise so that the cable conductor 711, the cable insulation 712, the cable outer semi-conductive layer 713 and the cable shield layer 714 are exposed sequentially from the axial distal end side.

The connection terminal 72 is crimped to the cable conductor 711 and is non-removably fixed to the cable conductor 711. The connection terminal 72 is a terminal to connect the power cable 71 to the contact member 4 and its end portion on the axial distal end side is inserted and fitted to the contact member 4. The connection terminal 72 is removably connected to the contact member 4 so that it can be pushed and inserted into the contact member 4 and can also be pulled out of the contact member 4.

The stress cone 73 is fitted onto the outer circumference of the cable insulation 712 and the cable outer semi-conductive layer 713. The stress cone 73 is axially compressed by the compression device 74 and is in contact with both the power cable 71 and the arrangement surface 212 of the bushing 21.

**In** the present embodiment, the stress cone 73 is composed of two members, one of which is an insulation portion 731 provided on the axial distal end side and the other is a semi-conductive portion 732 provided on the axial proximal end side. An outer circumferential surface of the insulation portion 731 has an inclined outer circumferential surface 731a inclined from its end on the axial distal end side toward the axial proximal end, and the inclined outer circumferential surface 731a is in contact with the inclined arrangement surface 212a of the bushing 21. The semi-conductive portion 732 has an inner circumferential portion in contact with the cable outer semi-conductive layer 713 and is connected to the ground potential via the cable outer semi-conductive layer 713. An annular stopper 76 is fitted onto the outer circumference of the power cable 71 on the axial distal end side of the stress cone 73. The stopper 76 serves to receive a compressive force axially acting from the compression device 74 on the stress cone 73 and is in contact with an end face of the inner conductor 22 on the axial proximal end side.

The compression device 74 is a device to axially compress the stress cone 73. The compression device 74 is in contact with the stress cone 73 on the axial distal end side and is locked by the cover member 75 on the axial proximal end side. The compression device 74 presses the stress cone 73 toward the axial distal end by, e.g., a reaction force of a coil spring 741. In the present embodiment, the compression device 74 is entirely made of a conductive material, but at least a portion thereof may be made of a non-conductive material.

The cover member 75 has a first cover 751 and a second cover 752 which are fixed to each other. The first cover 751 is tightened to the flange member 3 using stud bolts 77, etc., screwed into flange bottom wall 31. The power cable 71 protruding from the flange member 3 toward the axial distal end side, the stress cone 73 and the compression device 74 are surrounded from the outer circumference side by the first cover 751 in the power cable connection structure 10. A sealing portion 78 seals between an end portion of the first cover 751 on the axial proximal end side and the power cable 71. The sealing portion 78 is formed by winding a polyethylene tape or an epoxy tape, etc., provided with an adhesive material, and provides liquid tight sealing between the first cover 751 and the power cable 71.

The second cover 752 is fixed to the first cover 751 from the axial proximal end side of the first cover 751 and surrounds the sealing portion 78 from the outer circumference side. An end portion of the second cover 752 on the axial proximal end side is tightened by a tightening member 70 and is in tight contact with the power cable 71 via an elastic sheet 79.

### (Attachment structure of the power cable connection structure 10 for a roof 81 of the railway vehicle 8)

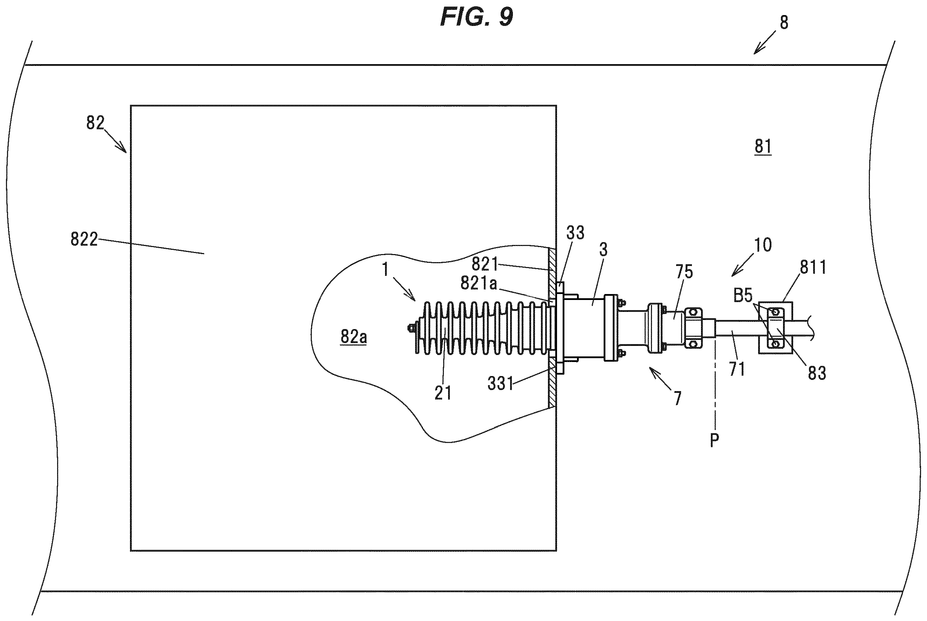

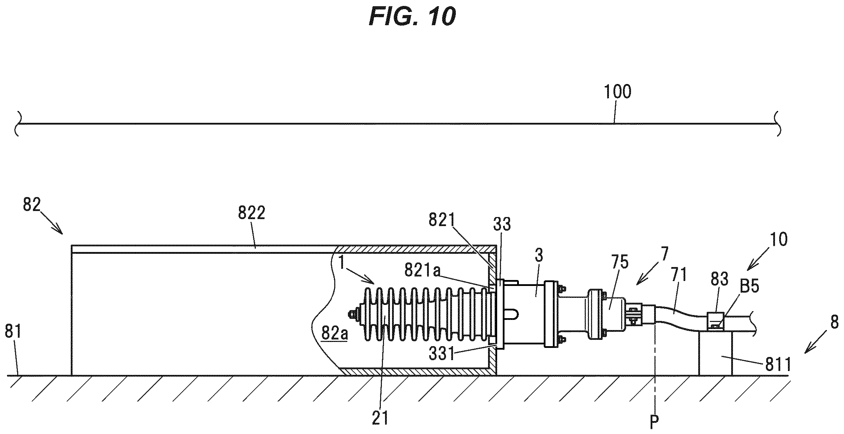

FIG.9 is a top view showing the railway vehicle 8 on which the power cable connection structure 10 is attached. FIG.10 is a side view showing the railway vehicle 8 on which the power cable connection structure 10 is attached. However, in FIGS. 9 and 10, illustration of bolts (see e.g., B3 in FIGS. 2 and 3) and nuts (see e.g., N in FIGS. 2 and 3) that are configured to tighten the power cable connection structure 10 and the equipment box 82 will be omitted for convenience.

The equipment box 82 is provided on the roof 81 of the railway vehicle 8 that is an attachment target for the power cable connection structure 10. The equipment box 82 includes a sidewall 821 along the vertical direction and a cover portion (i.e., lid portion) 822 that closes the sidewall 821 from an upper side. The attachment hole 821a described above for inserting the power cable connection structure 10 thereinto is provided on the sidewall 821.

As shown in FIG. 10, since a trolley wire 100 is located above the roof 81 of the railway vehicle 8, the height of the sidewall 821 is limited. Thus, a diameter of the attachment hole 821a that can be formed on the sidewall 821 should be limited. Therefore, particularly for the power cable connection structure 10 adopted to be attached to the equipment box 82 arranged on the roof 81 of the railway vehicle 8, the demand for reducing the size is remarkably high in order to insert the power cable connection structure 10 through the attachment hole 821a having a small diameter into the inner space 82a of the equipment box 82.

In addition, since various high voltage devices, high voltage paths (e.g., busbar) and the like (not shown) are housed in the inner space 82a of the equipment box 82, it is desirable to reduce a protrusion amount of the bushing unit 1 into the inner space 82a. Particularly for the equipment box 82 arranged on the roof 81 of the railway vehicle 8, since the height is limited as described above, the limitation on the space of the inner space 82a is remarkably large. Thus, particularly for the power cable connection structure 10 adopted to be attached to the equipment box 82 arranged on the roof 81 of the railway vehicle 8, the demand for reducing the protrusion amount of the power cable connection structure 10 into the inner space 82a is remarkably high.

Further, the power cable 71 of the power cable connection structure 10, which is exposed to the outside of the equipment box 82, is fixed on the roof 81 of the railway vehicle 8 by using a clamp 83. The clamp 83 covers the power cable 71 outside the equipment box 82 from the upper side and is tightened to a fixing target portion 811 of the roof 81 by using a bolt B5. A position of the fixing target portion 811 on the roof 81 of the railway vehicle 8 may be predetermined depending on each railway vehicle 8. Thus, when a position P of the end portion of the power cable 71 exposed at the cable assembly 7 on the axial distal end side is excessively distant from the attachment surface 331 toward the axial distal end side, it is hard to fix the power cable 71 on the fixing target portion 811 by using the clamp 83. For example, when the position P is excessively distant from the attachment surface 331 toward the axial proximal end side and the cover member 75 or the like having an outer diameter larger than that of the power cable 71 is arranged on the upper side of the fixing target portion 811, it is expected that the power cable 71 cannot be fixed on the fixing target portion 811 by using the clamp 83. Thus, it is required that the position P is not excessively distant from the attachment surface 331. In addition, in terms of the limitation on the space on the roof 81 of the railway vehicle 8, it is required that the position P is not excessively distant from the attachment surface 331 toward the axial proximal end side.

To satisfy the above demands, in the present embodiment, positional relations between the power cable connection structure 10 and each part of the attachment surface 331 are devised. It will be explained as below.

### (Positional relations between the attachment surface 331 and each part of the power cable connection structure 10)

Next, the positional relations between the attachment surface 331 and each part of the power cable connection structure 10 will be explained. However, unless otherwise mentioned, the description "a specified member located on the axial distal end side or the axial proximal end side relative to the attachment surface 331" means that at least a part of the specified member is located on the axial distal end side or the axial proximal end side relative to the attachment surface 331.

As shown in FIGS. 1 to 3, in the present embodiment, the flange member 3 is located on the axial proximal end side relative to the attachment surface 331. It is thereby possible to suppress the increase in size of a portion of the bushing unit 1 on the axial distal end side relative to the attachment surface 331 (i.e., a portion configured to be inserted into the inner space 82a of the equipment box 82). Thus, it is possible to reduce the size of the attachment hole 821a of the equipment box 82 into which the portion of the bushing unit 1 on the axial distal end side relative to the attachment surface 331 is inserted. In the present embodiment, the flange member 3 is entirely arranged on the axial proximal end side relative to the attachment surface 331. It is thereby possible to further reduce the size of the attachment hole 821a.

In addition, the arrangement surface 212 is located on the axial proximal end side relative to the attachment surface 331. The inner diameter of the arrangement surface 212 needs to be large to some extent to allow the insertion of the stress cone 73, and accordingly, it results in the increase in the outer diameter of the bushing 21 in an axial region where the arrangement surface 212 is formed unless it is specially devised. Therefore, by arranging the arrangement surface 212 on the axial proximal end side relative to the attachment surface 331, it is possible to suppress the increase in size of the portion of the bushing unit 1 on the axial distal end side relative to the attachment surface 331 (i.e., the portion configured to be inserted into the inner space 82a of the equipment box 82). It is thereby possible to reduce the size of the attachment hole 821a of the equipment box 82. In the present embodiment, the arrangement surface 212 is entirely arranged on the axial proximal end side relative to the attachment surface 331. It is thereby possible to further reduce the size of the attachment hole 821a.

Further, by arranging the flange member 3 and the arrangement surface 212 on the axial proximal end side relative to the attachment surface 331, it is possible to suppress the portion of the bushing unit 1 on the axial distal end side relative to the attachment surface 331 to be lengthy in the axial direction. It is thereby possible to suppress a large protrusion of the bushing unit 1 into the inner space 82a of the equipment box 82.

Further, the contact member 4 is located on the axial distal end side relative to the attachment surface 331. It is thereby possible to arrange a whole position of the cable assembly 7 closer to the axial distal end side with respect to the attachment surface 331. Thus, it is possible to suppress the most axial distal end side position P of the power cable 71 exposed from the cable assembly 7 to be largely distant from the attachment surface 331 toward the axial proximal end side. Further, in the present embodiment, the contact member 4 is entirely arranged on the axial distal end side relative to the attachment surface 331. Thus, it is possible to set the position P as a position closer to the attachment surface 331.

Further, the earth electrode 23 is located on the axial distal end side relative to the attachment surface 331. Since the earth electrode 23 shields an electric field in its inner circumference region and thereby relaxes the electric field strength around the bushing 21, it is possible to reduce the outer diameter of the bushing 21 around the earth electrode 23 by embedding the earth electrode 23 in the bushing 21. Thus, by arranging the earth electrode 23 on the axial distal end side relative to the attachment surface 331, it is possible to suppress an increase in size of a portion of the bushing 21 on the axial distal end side relative to the attachment surface 331 (i.e., a portion configured to be inserted into the inner space 82a of the equipment box 82). It is thereby possible to reduce the size of the attachment hole 821a of the equipment box 82. In the present embodiment, more than half of a formed region of the earth electrode 23 in the axial direction is arranged on the axial distal end side relative to the attachment surface 331. It is thereby possible to further relax the electric field around the bushing 21 at a region on the axial distal end side relative to the attachment surface 331. Therefore, it is possible to further reduce an outer diameter in a portion of the bushing 21 on the axial distal end side relative to the attachment surface 331. It is thereby possible to further reduce the size of the attachment hole 821a.

In addition, the earth electrode 23 is arranged to cross the position of the attachment surface 331 in the axial direction. That is, an end portion of the earth electrode 23 on the axial distal end side is located on the axial distal end side relative to the attachment surface 331 and an end portion of the earth electrode 23 on the axial proximal end side is located on the axial proximal end side relative to the attachment surface 331. Thus, it is possible to suppress the electric field to leak around the attachment surface 331 at a region from the earth electrode 23 on the axial proximal end side to the outside of the bushing 21, so that it is possible to further relax the electric field in vicinity of the attachment surface 331.

In addition, the connection terminal 72 configured to be connected to the contact member 4 is arranged on the axial distal end side relative to the attachment surface 331. Hereby, as a result that the whole position of the cable assembly 7 can be arranged closer to the axial distal end side with respect to the attachment surface 331, it is possible to suppress the position P to be largely distant from the attachment surface 331 toward the axial proximal end side. Further, the connection terminal 72 is provided to cross the position of the attachment surface 331 in the axial direction. That is, an end portion of the connection terminal 72 on the axial distal end side is located on the axial distal end side relative to the attachment surface 331, and an end portion of the connection terminal 72 on the axial proximal end side is located on the axial proximal end side relative to the attachment surface 331. More specifically, in the connection terminal 72, a portion configured to be inserted into the contact member 4 is located on the axial distal end side relative to the attachment surface 331, and a portion configured to be crimped by the cable conductor 711 of the power cable 71 is located on the axial proximal end side relative to the attachment surface 331. By forming the connection terminal 72 to cross the position of the attachment surface 331 in the axial direction, it is possible to suppress the position of the connection terminal 72 to be excessively distant from the axial distal end side with respect to the attachment surface 331, and the bushing unit 1 to excessively protrude toward the axial distal end side from the attachment surface 331.

In addition, the inner conductor 22 has the axial cylindrical portion 222a that is arranged on the axial distal end side relative to the attachment surface 331, and a diameter enlarging portion 222b that is arranged on the axial proximal end side relative to the attachment surface 331. That is, the axial cylindrical portion 222a having a relatively small outer diameter is located on the axial distal end side relative to the attachment surface 331, and the diameter enlarging portion 222b having a relatively large outer diameter is located on the axial proximal end side relative to the attachment surface 331. It is thereby possible to suppress an increase in outer diameter in a portion of the bushing unit 1 on the axial distal end side relative to the attachment surface 331 (i.e., a portion configured to be inserted into the inner space 82a of the equipment box 82). As a result, it is possible to reduce the size of the attachment hole 821a. The axial cylindrical portion 222a is arranged to cross the position of the attachment surface 331 in the axial direction, and the diameter enlarging portion 222b is entirely arranged on the axial proximal end side relative to the attachment surface 331.

In addition, the embedded conductive members 25 are exposed from the bushing 21 on the axial distal end side relative to the attachment surface 331. In the present embodiment, the embedded conductive members 25 are entirely arranged on the axial distal end side relative to the attachment surface 331. Therefore, it is possible to tighten the connection member 6 to the embedded conductive members 25 by using the bolt B4, with the flange member 3 being fixed to the bushing 21.

In addition, the connection member 6, which is electrically connected to the embedded conductive members 25 and the flange member 3, is fixed on an inner circumference side of the flange side wall 32. Thus, it is possible to suppress formation of a region having high electric field strength in the equipment box 82. For example, when the connection member 6 is fixed on the attachment surface 331 of the flange member 3, a member for fixing the connection member 6 such as bolt may protrude from the attachment surface 331 into the equipment box 82 so that the electric field strength around the bolt may increase. Thus, by fixing the connection member 6 on the inner circumference side of the flange side wall 32, it is possible to suppress the bolt B2 or the like for fixing the connection member 6 on the flange member 3 to largely protrude into the equipment box 82 and to form a region having high electric field strength in the equipment box 82.

### (Functions and Effects of the embodiment)

In the present embodiment, the end portion of the earth electrode 23 on the axial proximal end side is located on the axial distal end side relative to the arrangement surface 212 on which the stress cone 73 is arranged in contact therewith. Therefore, it is possible to reduce the size of the bushing 21. This will be explained below.

Firstly, the inner diameter of the arrangement surface 212 needs to be large to some extent to allow the insertion of the stress cone 73 attached to the power cable 71, and accordingly, it is necessary to increase the outer diameter of the bushing 21 in an axial region where the arrangement surface 212 is formed. Secondly, portions of the bushing 21 located on the inner and outer circumference sides of the earth electrode 23 need to have a certain thickness since manufacturing problems such as short shots may occur if such portions are excessively thin. Therefore, when the earth electrode 23 is provided to extend to a position where it overlaps the arrangement surface 212 when viewed in the radial direction, there is no choice but to increase the outer diameter of the bushing 21 in the axial region where the earth electrode 23 and the arrangement surface 212 overlap in the radial direction, which may result in an increase in size of the bushing 21. On the other hand, in the present embodiment, the end portion of the earth electrode 23 on the axial proximal end side is located on the axial distal end side relative to the arrangement surface 212 as described above, allowing for size reduction of the bushing 21.

In addition, the electric field shielding layer 5 for shielding an electric field is provided on the outer circumferential surface of the bushing 21 on the axial proximal end side relative to the earth electrode 23. Therefore, the electric field is shielded by the electric field shielding layer 5 in a region of the bushing 21 on the axial proximal end side relative to the earth electrode 23. Furthermore, in the present embodiment, a portion of the earth electrode 23 and a portion of the electric field shielding layer 5 overlap with each other when viewed in the radial direction. Therefore, the electric field can be shielded in a wide axial region from the end portion of the earth electrode 23 on the axial distal end side to the end portion of the electric field shielding layer 5 on the axial proximal end side, and as a result, it is possible to suppress an increase in electric field strength around the bushing 21.

In addition, the bushing unit 1 further includes the flange member 3. Then, the arrangement surface 212 is arranged on the axial proximal end side relative to the attachment surface 331. Therefore, it is possible to reduce a protruding length of the bushing unit 1 protruding from the attachment surface 331 on the axial distal end side (i.e., protruding into the inner space 82a of the equipment box 82). Many wires are routed inside the equipment box 82 in many cases, and if the bushing unit 1 largely protrudes into the equipment box 82, electrical insulation between the bushing unit 1 and the nearby wires may decrease. However, by reducing the protruding length of the bushing unit 1 protruding into the inner space 82a of the equipment box 82, it is possible to suppress a decrease in electrical insulation between the bushing unit 1 and the nearby wires. In addition, the earth electrode 23 is arranged on the axial distal end side relative to the attachment surface 331. Therefore, it is possible to shield the electric field in the bushing 21 protruding into the equipment box 82.

In addition, the connection members 6 electrically connected to the embedded conductive members 25 and the flange member 3 are fixed to the flange side wall 32 on the inner circumference side. Therefore, it is possible to prevent formation of a high electric field strength region inside the equipment box 82. When the connection members 6 are fixed to, e.g., the attachment surface 331 of the flange member 3, bolts, etc., used to fix the connection members 6 protrude from the attachment surface 331 into the equipment box 82 and electric field strength may increase around the bolts. However, by fixing the connection members 6 to the flange side wall 32 on the inner circumference side, the bolts B2, etc., used to fix the connection members 6 to the flange member 3 can be prevented from largely protruding into the equipment box 82, thereby suppressing formation of a high electric field strength portion inside the equipment box 82.

As described above, according to the present embodiment, it is possible to provide a bushing unit in which a bushing can be reduced in size.

## Claims

1. A bushing unit (1), comprising:
an inner conductor (22) configured to be electrically connected to an end of a power cable (71);
a bushing (21) covering the inner conductor; and
an earth electrode (23) being embedded in the bushing and provided to surround the inner conductor,
wherein an inner circumferential surface of the bushing comprises an arrangement surface (212) for arranging a stress cone (73) attached to the power cable, and
wherein when one side of the inner conductor configured to be connected to the end of the power cable is defined as a proximal end side and a side opposite to the proximal end side is defined as a distal end side, an end of the earth electrode on the proximal end side is located on the distal end side relative to the arrangement surface,
a flange member (3) that comprises an attachment surface (331) configured to be attached to an external attachment target member (82) and is fixed to the bushing
wherein the arrangement surface is arranged on the proximal end side relative to the attachment surface
wherein the earth electrode is arranged on the distal end side relative to the attachment surface, said bushing unit further comprising:
an embedded conductive member (25) being embedded in the bushing with being partially exposed and being electrically connected to the earth electrode; and
wherein the flange member comprises a flange attachment portion (33) comprising the attachment surface and a flange side wall being provided on the proximal end side relative to the flange attachment portion and surrounding the bushing, and
the bushing unit being **characterized in that** it comprises a connection member (6) being electrically connected to the embedded conductive member and the flange member,
wherein the connection member is fixed on an inner circumference side of the flange side wall.

2. The bushing unit according to claim 1, wherein an electric field shielding layer (5) for shielding an electric field is provided on an outer circumferential surface of the bushing on the proximal end side relative to the earth electrode.

3. The bushing unit according to claim 2, wherein a portion of the earth electrode and a portion of the electric field shielding layer overlap each other when viewed in a radial direction.

4. The bushing unit according to any one of claims 1 to 3, wherein the bushing unit is a bushing unit for a railway vehicle, wherein the bushing unit further comprises a contact member (4) that is attached to the inner conductor and electrically connects the power cable and the inner conductor, and wherein the contact member is located on the distal end side relative to the attachment surface.

5. The bushing unit according to claim 4, wherein the flange member comprises a flange bottomed portion (31) that is opposite to a surface of the bushing on the proximal distal end side and fixed on the bushing, the flange side wall provided from the flange bottomed portion toward the distal end side, and the flange attachment portion that is provided on an outer circumference side of the flange member from the flange side wall, and comprises the attachment surface on a surface on the distal end side.

6. The bushing unit according to claim 4 or 5, wherein the contact member is entirely arranged on the distal end side relative to the attachment surface.

7. The bushing unit according to any one of claims 4 to 6, wherein the earth electrode is arranged to cross a position of the attachment surface in an axial direction.

8. The bushing unit according to any one of claims 4 to 7, wherein more than half of a formed region of the earth electrode in an axial direction is arranged on the distal end side relative to the attachment surface.

9. The bushing unit according to any one of claims 4 to 8, wherein the flange member is entirely arranged on the proximal end side relative to the attachment surface.

10. The bushing unit according to any one of claims 4 to 9, wherein a bottomed cylindrical portion (220) is provided at an end portion of the inner conductor on the proximal end side, and the bottomed cylindrical portion comprises a bottomed cylindrical shape that is opened toward the proximal end side and includes the contact member inside the bottomed cylindrical portion,
wherein the bottomed cylindrical portion comprises a bottom wall portion (221), and a cylindrical wall portion (222) extended from the bottom wall portion toward the proximal end side,
wherein the cylindrical wall portion comprises an axial cylindrical portion (222a) provided from the bottom wall portion along an axial direction, and a diameter enlarging portion (222b) with inner and outer diameters both increasing from the axial cylindrical portion toward the axial proximal end,
wherein the axial cylindrical portion is arranged on the distal end side relative to the attachment surface, and
wherein the diameter enlarging portion is arranged on the proximal end side relative to the attachment surface.

11. The bushing unit according to any one of claims 4 to 10, wherein the embedded conductive member is exposed from the bushing on the distal end side relative to the attachment surface.

12. The bushing unit according to any one of claims 4 to 11, wherein an electric field shielding layer (5) that shields an electric field and is formed of a conductive coating is provided at an outer circumferential surface of the bushing on the proximal end side relative to the earth electrode.

13. The bushing unit according to claim 12, wherein the electric field shielding layer is partially provided at a position overlapping with the earth electrode in a radial direction.

14. The bushing unit according to any one of claims 4 to 13, wherein a portion on the distal end side relative to the attachment surface is adopted to be inserted through an attachment hole (821a) provided on a side wall (821) of an equipment box (82) as the external attachment target member that is arranged on a roof (81) of a railway vehicle (8), and the power cable is adopted to be fixed on the roof at an outside of the equipment box by using a clamp.

15. The bushing unit according to any one of claims 4 to 14,
wherein the flange attachment portion is a flange attachment wall.

16. A power cable connection structure for a railway vehicle comprising:
the bushing unit according to any one of claims 4 to 15; and
a cable assembly (7) attached to the bushing unit
wherein the cable assembly comprises the power cable, a connection terminal (72) electrically connected to a cable conductor exposed at the power cable, and the stress cone, and
wherein the connection terminal is electrically connected to the contact member and is located on the distal end side relative to the attachment surface.

17. The power cable connection structure for the railway vehicle according to claim 16, wherein the connection terminal is arranged to cross a position of the attachment surface in an axial direction.

## Patentansprüche

1. Durchführungseinheit (1), umfassend:
einen Innenleiter (22), der dazu eingerichtet ist, elektrisch mit einem Ende eines Stromkabels (71) verbunden zu werden;
eine Durchführung (21), die den Innenleiter bedeckt; und
eine Erdungselektrode (23), die in der Durchführung eingebettet ist und so vorgesehen ist, dass sie den Innenleiter umgibt, wobei
eine Innenumfangsfläche der Durchführung eine Anordnungsfläche (212) zum Anordnen eines an dem Stromkabel angebrachten Steuerkonus (73) aufweist, und wobei,
wenn eine Seite des Innenleiters, die dazu eingerichtet ist, mit dem Ende des Stromkabels verbunden zu werden, als eine proximale Endseite definiert ist und eine der proximalen Endseite gegenüberliegende Seite als eine distale Endseite definiert ist, ein Ende der Erdungselektrode auf der proximalen Endseite relativ zu der Anordnungsfläche auf der distalen Endseite angeordnet ist,
ein Flanschelement (3), das eine Befestigungsfläche (331) aufweist, die dazu eingerichtet ist, an einem externen Anbringungszielbauteil (82) angebracht zu werden, und das an der Durchführung befestigt ist, wobei
die Anordnungsfläche relativ zu der Befestigungsfläche auf der proximalen Endseite angeordnet ist, wobei die Erdungselektrode relativ zu der Befestigungsfläche auf der distalen Endseite angeordnet ist, wobei
die Durchführungseinheit ferner umfasst: ein eingebettetes leitfähiges Element (25), das teilweise freiliegend in der Durchführung eingebettet ist und elektrisch mit der Erdungselektrode verbunden ist; und wobei
das Flanschelement einen Flanschbefestigungsabschnitt (33), der die Befestigungsfläche aufweist, und eine Flanschseitenwand aufweist, die relativ zu dem Flanschbefestigungsabschnitt auf der proximalen Endseite vorgesehen ist und die Durchführung umgibt, und wobei die Durchführungseinheit **dadurch gekennzeichnet ist, dass**
sie ein Verbindungselement (6) umfasst, das elektrisch mit dem eingebetteten leitfähigen Element und dem Flanschelement verbunden ist, wobei das Verbindungselement an einer Innenumfangsseite der Flanschseitenwand befestigt ist.

2. Durchführungseinheit nach Anspruch 1, wobei eine elektrische Feldabschirmungsschicht (5) zum Abschirmen eines elektrischen Feldes auf einer Außenumfangsfläche der Durchführung auf der proximalen Endseite relativ zu der Erdungselektrode vorgesehen ist.

3. Durchführungseinheit nach Anspruch 2, wobei ein Abschnitt der Erdungselektrode und ein Abschnitt der elektrischen Feldabschirmungsschicht einander bei Betrachtung in einer radialen Richtung überlappen.

4. Durchführungseinheit nach einem der Ansprüche 1 bis 3, wobei die Durchführungseinheit eine Durchführungseinheit für ein Schienenfahrzeug ist, wobei die Durchführungseinheit ferner ein Kontaktelement (4) umfasst, das an dem Innenleiter angebracht ist und das Stromkabel und den Innenleiter elektrisch verbindet, und wobei das Kontaktelement relativ zu der Befestigungsfläche auf der distalen Endseite angeordnet ist.

5. Durchführungseinheit nach Anspruch 4, wobei das Flanschelement einen Flanschbodenabschnitt (31), der einer Oberfläche der Durchführung auf der proximalen Endseite gegenüberliegt und an der Durchführung befestigt ist, die Flanschseitenwand, die von dem Flanschbodenabschnitt zu der distalen Endseite hin vorgesehen ist, und den Flanschbefestigungsabschnitt umfasst, der auf einer Außenumfangsseite des Flanschelements von der Flanschseitenwand aus vorgesehen ist und die Befestigungsfläche auf einer Oberfläche auf der distalen Endseite aufweist.

6. Durchführungseinheit nach Anspruch 4 oder 5, wobei das Kontaktelement gänzlich auf der distalen Endseite relativ zu der Befestigungsfläche angeordnet ist.

7. Durchführungseinheit nach einem der Ansprüche 4 bis 6, wobei die Erdungselektrode so angeordnet ist, dass sie eine Position der Befestigungsfläche in einer axialen Richtung kreuzt.

8. Durchführungseinheit nach einem der Ansprüche 4 bis 7, wobei mehr als die Hälfte eines ausgebildeten Bereichs der Erdungselektrode in einer axialen Richtung auf der distalen Endseite relativ zu der Befestigungsfläche angeordnet ist.

9. Durchführungseinheit nach einem der Ansprüche 4 bis 8, wobei das Flanschelement gänzlich auf der proximalen Endseite relativ zu der Befestigungsfläche angeordnet ist.

10. Durchführungseinheit nach einem der Ansprüche 4 bis 9, wobei
ein zylindrischer Abschnitt (220) mit Boden an einem Endabschnitt des Innenleiters auf der proximalen Endseite vorgesehen ist, und der zylindrische Abschnitt mit Boden eine zylindrische Form mit Boden aufweist, die zur proximalen Endseite hin offen ist und das Kontaktelement im Inneren des zylindrischen Abschnitts mit Boden beinhaltet, wobei
der zylindrische Abschnitt mit Boden einen Bodenwandabschnitt (221) und einen zylindrischen Wandabschnitt (222) umfasst, der sich von dem Bodenwandabschnitt zu der proximalen Endseite hin erstreckt, wobei
der zylindrische Wandabschnitt einen axialen zylindrischen Abschnitt (222a), der von dem Bodenwandabschnitt entlang einer axialen Richtung vorgesehen ist, und einen Durchmessererweiterungsabschnitt (222b) aufweist, dessen Innen- und Außendurchmesser beide von dem axialen zylindrischen Abschnitt zu dem axialen proximalen Ende hin zunehmen, wobei
der axiale zylindrische Abschnitt auf der distalen Endseite relativ zu der Befestigungsfläche angeordnet ist, und wobei
der Durchmessererweiterungsabschnitt auf der proximalen Endseite relativ zu der Befestigungsfläche angeordnet ist.

11. Durchführungseinheit nach einem der Ansprüche 4 bis 10, wobei das eingebettete leitfähige Element von der Durchführung auf der distalen Endseite relativ zu der Befestigungsfläche freiliegt.

12. Durchführungseinheit nach einem der Ansprüche 4 bis 11, wobei eine elektrische Feldabschirmungsschicht (5), die ein elektrisches Feld abschirmt und aus einer leitfähigen Beschichtung gebildet ist, an einer Außenumfangsfläche der Durchführung auf der proximalen Endseite relativ zu der Erdungselektrode vorgesehen ist.

13. Durchführungseinheit nach Anspruch 12, wobei die elektrische Feldabschirmungsschicht teilweise an einer Position vorgesehen ist, die mit der Erdungselektrode in einer radialen Richtung überlappt.

14. Durchführungseinheit nach einem der Ansprüche 4 bis 13, wobei ein Abschnitt auf der distalen Endseite relativ zu der Befestigungsfläche dazu eingerichtet ist, durch ein Befestigungsloch (821a) eingeführt zu werden, das an einer Seitenwand (821) eines Gerätekastens (82) als das externe Anbringungszielbauteil vorgesehen ist, der auf einem Dach (81) eines Schienenfahrzeugs (8) angeordnet ist, und das Stromkabel dazu eingerichtet ist, auf dem Dach an einer Außenseite des Gerätekastens unter Verwendung einer Klemme auf dem Dach befestigt zu werden.

15. Durchführungseinheit nach einem der Ansprüche 4 bis 14, wobei der Flanschbefestigungsabschnitt eine Flanschbefestigungswand ist.

16. Stromkabelverbindungsstruktur für ein Schienenfahrzeug, umfassend:
die Durchführungseinheit nach einem der Ansprüche 4 bis 15; und
eine Kabelbaugruppe (7), die an der Durchführungseinheit angebracht ist, wobei die Kabelbaugruppe das Stromkabel, einen Anschlusskontakt (72), der elektrisch mit einem an dem Stromkabel freiliegenden Kabelleiter verbunden ist, und den Steuerkonus umfasst, und wobei der Anschlusskontakt elektrisch mit dem Kontaktelement verbunden ist und auf der distalen Endseite relativ zu der Befestigungsfläche angeordnet ist.

17. Stromkabelverbindungsstruktur für das Schienenfahrzeug nach Anspruch 16, wobei der Anschlusskontakt so angeordnet ist, dass er eine Position der Befestigungsfläche in einer axialen Richtung kreuzt.

## Revendications

1. Une unité (1) formant douille, comprenant :
un conducteur interne (2), configuré pour être connecté électriquement à une extrémité d'un câble d'alimentation (71) ;
une douille (21), recouvrant le conducteur interne ; et
une électrode de terre (23), encastrée dans la douille et prévue pour entourer le conducteur interne,
une surface circonférentielle interne de la douille comprenant une surface d'agencement (212) pour disposer un cône de contrainte (73) fixé au câble d'alimentation, et,
lorsqu'un côté du conducteur interne configuré pour être connecté à l'extrémité du câble d'alimentation est défini en tant que côté d'extrémité proximale et qu'un côté opposé au côté d'extrémité proximale est défini en tant que côté d'extrémité distale, une extrémité de l'électrode de terre sur le côté d'extrémité proximale est située sur le côté d'extrémité distale par rapport à la surface d'agencement,
un élément (3) formant bride, qui comprend une surface de fixation (331) configurée pour être fixée à un élément cible de fixation externe (82) et qui est fixé à la douille,
la surface d'agencement est agencée sur le côté d'extrémité proximale par rapport à la surface de fixation,
l'électrode de terre est agencée sur le côté d'extrémité distale par rapport à la surface de fixation, ladite unité formant douille comprenant en outre :
un élément conducteur encastré (25), qui est encastré dans la douille en étant partiellement exposé et connecté électriquement à l'électrode de terre ; et
l'élément formant bride comprend une partie (33) de fixation de bride comprenant la surface de fixation et une paroi latérale de bride prévue sur le côté d'extrémité proximale par rapport à la partie de fixation de bride et entourant la douille, et
l'unité formant douille étant **caractérisée en ce qu'**elle comprend un élément de connexion (6) connecté électriquement à l'élément conducteur encastré et à l'élément formant bride,
l'élément de connexion étant fixé sur un côté de circonférence interne de la paroi latérale de bride.

2. L'unité formant douille selon la revendication 1, dans laquelle une couche (5) de protection contre les champs électriques destinée à protéger contre un champ électrique est prévue sur une surface circonférentielle externe de la douille sur le côté d'extrémité proximale par rapport à l'électrode de terre.

3. L'unité formant douille selon la revendication 2, dans laquelle une partie de l'électrode de terre et une partie de la couche de protection contre les champs électriques se chevauchent lorsqu'elles sont vues dans une direction radiale.

4. L'unité formant douille selon l'une quelconque des revendications 1 à 3, dans laquelle l'unité formant douille est une unité formant douille pour un véhicule ferroviaire, l'unité formant douille comprenant en outre un élément de contact (4) qui est fixé au conducteur interne et qui relie électriquement le câble d'alimentation et le conducteur interne, et l'élément de contact étant situé sur le côté d'extrémité distale par rapport à la surface de fixation.

5. L'unité formant douille selon la revendication 4, dans laquelle l'élément formant bride comprend une partie inférieure de bride (31), qui est opposée à une surface de la douille sur le côté proximal de l'extrémité distale et qui est fixée sur la douille, la paroi latérale de bride, aménagée à partir de la partie inférieure de la bride vers le côté d'extrémité distale, et la partie de fixation de bride, qui est aménagée sur un côté de circonférence externe de l'élément formant bride à partir de la paroi latérale de bride, et comprend la surface de fixation sur une surface du côté d'extrémité distale.

6. L'unité formant douille selon la revendication 4 ou la revendication 5, dans laquelle l'élément de contact est entièrement agencé sur le côté d'extrémité distale par rapport à la surface de fixation.

7. L'unité formant douille selon l'une quelconque des revendications 4 à 6, dans laquelle l'électrode de terre est agencée de manière à croiser une position de la surface de fixation dans une direction axiale.

8. L'unité formant douille selon l'une quelconque des revendications 4 à 7, dans laquelle plus de la moitié d'une zone formée de l'électrode de terre dans une direction axiale est agencée sur le côté d'extrémité distale par rapport à la surface de fixation.

9. L'unité formant douille selon l'une quelconque des revendications 4 à 8, dans laquelle l'élément formant bride est entièrement agencé sur le côté d'extrémité proximale par rapport à la surface de fixation.

10. L'unité formant douille selon l'une quelconque des revendications 4 à 9, dans laquelle une partie cylindrique (220) formant un fond est prévue à une partie d'extrémité du conducteur interne sur le côté d'extrémité proximale, et la partie cylindrique à fond comprend une forme cylindrique formant un fond qui est ouverte vers le côté d'extrémité proximale et comprend l'élément de contact à l'intérieur de la partie cylindrique formant un fond,
la partie cylindrique à fond comprenant une partie de paroi de fond (221) et une partie de paroi cylindrique (222) s'étendant depuis la partie de paroi formant un fond vers le côté d'extrémité proximale,
la partie de paroi cylindrique comprenant une partie cylindrique axiale (222a) prévue depuis la partie de paroi de fond le long d'une direction axiale, et une partie d'élargissement de diamètre (222b) avec des diamètres interne et externe augmentant tous deux depuis la partie cylindrique axiale vers l'extrémité proximale axiale,
la partie cylindrique axiale étant agencée sur le côté d'extrémité distale par rapport à la surface de fixation, et
la partie élargissant le diamètre étant agencée sur le côté d'extrémité proximale par rapport à la surface de fixation.

11. L'unité formant douille selon l'une quelconque des revendications 4 à 10,
dans laquelle l'élément conducteur encastré est exposé à partir de la douille du côté de l''extrémité distale par rapport à la surface de fixation.

12. L'unité formant douille selon l'une quelconque des revendications 4 à 11, dans laquelle une couche (5) de protection contre les champs électriques, qui protège contre un champ électrique et est formée d'un revêtement conducteur, est prévue sur une surface circonférentielle externe de la douille du côté de l'extrémité proximale par rapport à l'électrode de terre.

13. L'unité formant douille selon la revendication 12, dans laquelle la couche de protection contre les champs électriques est partiellement prévue à une position chevauchant l'électrode de terre dans une direction radiale.

14. L'unité formant douille selon l'une quelconque des revendications 4 à 13, dans laquelle une partie du côté d'extrémité distale par rapport à la surface de fixation est conçue pour être insérée à travers un trou de fixation (821a) aménagé sur une paroi latérale (821) d'un boîtier d'équipement (82) en tant qu'élément cible de fixation externe qui est agencé sur un toit (81) d'un véhicule ferroviaire (8), et le câble d'alimentation est conçu pour être fixé sur le toit à l'extérieur du boîtier d'équipement au moyen d'une pince.

15. L'unité formant douille selon l'une quelconque des revendications 4 à 14,
dans laquelle la partie de fixation de bride est une paroi de fixation de bride.

16. Une structure de connexion de câble d'alimentation pour un véhicule ferroviaire comprenant :
l'unité formant douille selon l'une quelconque des revendications 4 à 15 ; et
un ensemble (7) formant câble, fixé à l'unité formant douille,
l'ensemble câble comprenant le câble d'alimentation, une borne de connexion (72) connectée électriquement à un conducteur de câble exposé au niveau du câble d'alimentation, et le cône de contrainte, et
la borne de connexion étant connectée électriquement à l'élément de contact et étant située du côté d'extrémité distale par rapport à la surface de fixation.

17. La structure de connexion de câble d'alimentation pour le véhicule ferroviaire selon la revendication 16, dans laquelle la borne de connexion est agencée de manière à croiser une position de la surface de fixation dans une direction axiale.
